# EUROPÄISCHE PATENTSCHRIFT

(11) **EP 2 696 041 B1**
(45) Veröffentlichungstag und Bekanntmachung des Hinweises auf die Patenterteilung: **22.01.2020**
(21) Anmeldenummer: 12179453.1
(22) Anmeldetag: 07.08.2012
(51) Int. Cl.: F01D 17/16

(54) **LEITSCHAUFELKRANZ EINER GASTURBINE SOWIE MONTAGEVERFAHREN**
GUIDE BLADE ASSEMBLY OF A GAS TURBINE AND ASSEMBLY METHOD
ASSEMBLAGE DE STATOR D'UNE TURBINE À GAZ ET PROCÉDÉ DE MONTAGE

(43) Veröffentlichungstag der Anmeldung: 12.02.2014
(73) Patentinhaber: MTU Aero Engines AG, 80995 München (DE)
(72) Erfinder: Humhauser, Werner, 85368 Moosburg (DE)

(56) Entgegenhaltungen:
- EP-A2- 1 705 341
- DE-A1-102008 032 661
- US-A- 4 604 030
- US-A- 4 706 354
- US-A- 5 062 767
- US-A- 6 129 512
- US-A1- 2002 154 991
- US-A1- 2007 059 161
- US-A1- 2009 208 338

## Beschreibung

Die Erfindung betrifft einen Leitschaufelkranz nach dem Oberbegriff des Patentanspruchs 1, ein Verfahren zur Montage eines Leitschaufelkranzes sowie eine Strömungsmaschine.

Strömungsmaschinen wie Flugzeugtriebwerke haben zur Einstellung optimaler Betriebsbedingungen regelmäßig zumindest eine verdichterseitige verstellbare Leitschaufelreihe mit einer Vielzahl von um ihre Hauptachse bzw. Schaufelachse verschwenkbaren Laufschaufeln. Die Leitschaufelreihe bildet mit einem einen Rotorabschnitt umgreifenden Innenring einen Leitschaufelkranz. Der Innenring dient zur inneren zum Stabilisieren und Lagerung der Leitschaufeln und weist gewöhnlich eine Vielzahl von radialen Lagerbohrungen auf, in die Lagerbuchsen zur Aufnahme jeweils eines schaufelseitigen Lagerzapfens eingesetzt sind.

Wie beispielsweise in der DE 10 2007 015 669 A1 gezeigt, kann ein Innenring in einer horizontalen Gehäusetrennebene der Strömungsmaschine in zwei Halbringe unterteilt sein, die wiederum entlang einer axialen Trennebene in ein vorderes Halbringsegment und in ein hinteres Halbringsegment unterteilt sind. Die Halbringsegmente werden in axialer Richtung um die Lagerzapfen der Laufschaufeln zusammengesetzt und mittels axialen Verbindungselementen wie Stiften oder Schrauben, die zwischen den benachbarten Lagerzapfen hindurchgeführt werden, montiert. Zur Abdichtung eines Radialspaltes zwischen dem Innenring und einem gegenüberliegenden Rotorabschnitt ist auf den Halbringsegmenten ein Dichtungsträger mit innenumfangsseitigen Einlaufbelägen in Umfangsrichtung aufgeschoben. Die Positionierung der axialen Verbindungselemente erfordert jedoch einen Mindestraum zwischen den Lagerbuchsen, was sich begrenzend auf eine Mindesttriebwerksgröße auswirkt.

In der DE 10 2006 024 085 A1 wird alternativ vorgeschlagen, den Innenring aus zwei in axialer Richtung ungeteilten Halbringen zusammenzusetzen. Die Halbringe sind derart elastisch verformbar, dass sie über den Lagerzapfen der in Gehäusehälften montierten Laufschaufeln abgerollt werden können. Hierzu werden die Halbringe auf einen konstanten Spannradius vorgespannt, im Bereich der Lagerzapfen positioniert und dann entspannt. Ein separater Dichtungsträger zur Abdichtung eines Radialspaltes zwischen dem Innenring und einem gegenüberliegenden Rotorabschnitt ist jedoch auch bei dieser Variante erforderlich.

In der US 4,395,195 A wird vorgeschlagen, die Ringsegmente eines in axialer Richtung ungeteilten Innenrings mit jeweils einem Umfangswinkel auszubilden, der wesentlich kleiner als 180° ist. Hierdurch ist eine Montage ohne eine elastische Verformung der Ringsegmente möglich. Die Ringsegmente werden jeweils auf einen Lagerkörper in Umfangsrichtung aufgeschoben und an ihren Stoßflächen formschlüssig gekoppelt. Die Lagerkörper dienen zur Lagerung von mindestens zwei Leitschaufeln und haben den gleichen Umfangswinkel wie die Ringsegmente. Allerdings ergeben sich aufgrund der Vielzahl von Ringsegmenten Schwingungsprobleme. Ferner werden im Bereich der Ringsegmentenstoßflächen potentielle Leckagepfade geschaffen. Zur Abdichtung eines Radialspaltes zwischen dem Innenring und einem gegenüberliegenden Rotorabschnitt sind die Ringsegmente innenumfangsseitig mit Einlaufbelägen versehen.

Die US 6 129 512 A zeigt einen Leitschaufelkranz, der eine Vielzahl von Lagerkörpern mit jeweils einer Vielzahl von Lagerbohrungen aufweist. Die Lagerkörper sind in U-förmige Halbringe eingesetzt, die gemeinsam ein Dichtelement aufnehmen.

Aufgabe der Erfindung ist es, einen Leitschaufelkranz für eine Strömungsmaschine zu schaffen, der die vorgenannten Nachteile beseitigt und eine optimale Einstellung eines Radialspaltes zu einem von dem Leitschaufelkranz umgriffenen Rotorabschnitt ermöglicht. Zudem ist es Aufgabe der Erfindung, ein einfaches Verfahren zur Montage eines Leitschaufelkranzes und eine Strömungsmaschine zu schaffen, die zumindest einen hohen Verdichterwirkungsgrad aufweist.

Diese Aufgabe wird gelöst durch einen Leitschaufelkranz mit den Merkmalen des Patentanspruchs 1, durch ein Verfahren mit den Merkmalen des Patentanspruchs 8 und durch eine Strömungsmaschine mit den Merkmalen des Patentanspruchs 9.

Ein erfindungsgemäßer Leitschaufelkranz für eine Strömungsmaschine hat eine Vielzahl von verdrehbaren Leitschaufeln, einen Innenring zum radial inneren Stabilisieren der Leitschaufeln, eine Dichtung zum Abdichten eines Radialspaltes zwischen dem Innenring und einem gegenüberliegenden Rotorabschnitt und Lagerkörper zum Lagern der Leitschaufeln in dem Innenring. Erfindungsgemäß ist jede Leitschaufel in einem einzelnen Lagerkörper gelagert und der Innenring ist aus zwei Halbringen zusammengesetzt, die in Umfangsrichtung auf die Lagerkörper aufgeschoben werden können.

Der erfindungsgemäße Leitschaufelkranz hat einen multifunktionellen Innenring. Zum einen dient er zum Verbinden der Lagerkörper. Zum anderen dient er zum Tragen von Einlaufbelägen und somit als Dichtungsträger. Dadurch, dass der Innenring und hierdurch die Einlaufbeläge über die Lagerkörper speichenzentriert gelagert ist bzw. sind, erfolgt eine selbsttätige und somit einer optimale Radialspalteinstellung, was sich Leckage minimierend auswirkt. Da die Leitschaufeln in den Lagerkörpern gelagert sind und diese getrennt von dem Innenring bzw. dessen Halbringen hergestellt sind, entfällt eine genaue Umfangspositionierung von innenringseitigen Lagerbohrungen zur Aufnahme der Lagerzapfen. Der erfindungsgemäße Leitschaufelkranz erfordert keine weitere Umfangssegmentierung oder gar eine axiale Teilung der Halbringe, so dass zum einen die Bildung von Leckagepfaden innerhalb des Innenrings minimiert ist und zum anderen keine axiale Verschraubung von vorderen und hinteren Halbringsegmenten notwendig ist. Der Leitschaufelkranz weist eine geringe Teileanzahl und somit eine vereinfachte Montage und auch Demontage auf. Dadurch, dass die Halbringe nicht mit Lagerbohrungen versehen werden müssen und zudem keine zu sichernden vorderen und hinteren Halbringsegmente aufweisen, wird deren Komplexität wesentlich reduziert, was eine einfache Herstellung der Halbringe beispielsweise als Drehteile ermöglicht.

Erfindungsgemäß berühren sich die Lagerkörper seitlich und haben jeweils zwei zueinander entgegengesetzte und sich in Umfangsrichtung erstreckende Nuten. Die Halbringe haben erfindungsgemäß jeweils ein U-förmiges Profil mit zwei gegenüberliegenden und sich in Umfangsrichtung erstreckenden Vorsprüngen, mittels denen sie in die Nuten eingreifen. Derartige Lagerkörper und derartige Halbringe sind einfach herzustellen und einfach zu montieren. Zudem erfolgt eine vordere und hintere Führung der Halbringe an den Lagerkörpern bzw. eine vordere und hintere Verbindung der benachbarten Lagerkörper, wodurch eine hohe Stabilität erreicht wird.

Die Lagerkörper können jeweils einen Buchsenabschnitt, in dem die Leitschaufeln bezogen auf ihre Verstellachse mit jeweils einem Lagerzapfen radial geführt sind, und jeweils einen Senkabschnitt haben, in dem die Leitschaufeln mit ihrem jeweils gegenüber den Lagerzapfen radial erweiterten Schaufelteller aufgenommen sind. Dadurch, dass die Schaufelteller in den Senkabschnitten aufgenommen sind, kann eine stufenlose Ringraumwandung im Bereich des Leitschaufelkranzes geschaffen werden, was sich strömungstechnisch günstig auf eine den Ringraum durchströmende Hauptströmung auswirkt. Gleichzeitig werden radiale Fahnenspalte zwischen Laufschaufelblättern und dem Innenring minimiert, was sich ebenfalls positiv auf die Hauptströmung auswirkt. Gleichzeitig wird durch die radial erweiterten Schaufelteller jeweils ein Anschlag für den Innenring geschaffen, so dass ein versehentliches Auflaufen des Innenrings auf die Schaufelblätter infolge von unterschiedlichen Wärmeausdehnungen verhindert wird.

Die Lagerkörper können beispielsweise aus Kunststoff sein. Derartige Lagerkörper haben ein geringes Gewicht und ermöglichen eine reibungsarme Lagerung. Vorzugsweise wird ein Kunststoff mit einer geringen thermischen Leitfähigkeit und mit einer hohen mechanischen und chemischen Belastbarkeit verwendet. Beispielhafte Kunststoff sind Vespel® oder Kunststoffe auf Karbonbasis.

Alternativ sind die Lagerkörper metallisch und innenumfangsseitig zumindest im Bereich ihres Buchsenabschnittes mit einer Gleitschicht versehen. Derartige Lagerkörper sind thermisch, mechanisch und chemisch hoch belastbar und können beispielsweise mittels Lasersintern hergestellt werden. Die Gleitschicht ermöglicht dabei eine genaue Einstellung eines Reibwertes unabhängig vom metallischen Grundmaterial der Lagerkörper.

Die Dichtung kann eine Vielzahl von plattenartigen Dichtelementen aufweisen, die jeweils an einer Umfangswandung der Halbringe angeordnet sind. Derartige Dichtelemente sind beispielsweise Einlaufbeläge, die einen Umfangswinkel von 180° aufweisen können. Sie ermöglichen ein verlässliches Einlaufen von rotorseitigen Dichtspitzen bzw. Dichtfins und somit eine hohe Abdichtung. Die Dichtelemente können selbstverständlich auch stärker umfangssegmentiert sein. Bevorzugterweise sind die Dichtelemente stoffschlüssig mit den Halbringen verbunden, beispielsweise verlötet oder verschweißt. Alternativ sind sie kraftschlüssig mit den Halbringen verbunden, insbesondere verstiftet bzw. vernietet.

Alternativ kann die Dichtung eine Vielzahl von Bürstenelementen aufweisen, die stromabwärts der Leitschaufeln an den Halbringen lösbar eingespannt sind. Die Bürstenelemente zeichnen sich durch ein geringes Gewicht und durch eine einfache Auswechselbarkeit aus, da sie nicht wie die plattenartigen Dichtelemente stoffschlüssig oder kraftschlüssig mit den Halbringen verbunden sind, sondern formschlüssig.

Bevorzugterweise haben die Bürstenelemente jeweils einen Halteabschnitt, mittels dem sie in eine Haltenut der Halbringe eintauchen und sind mittels eines zwischen einem Radialsteg der Halbringe und einem zwischen dem Radialsteg und dem Halteabschnitt eingesetzten Spannkörper lagefixiert. Eine derartige Lagefixierung ist fertigungstechnisch einfach auszuführen und robust.

Bei einem erfindungsgemäßen Verfahren zur Montage eines Leitschaufelkranzes wird auf jeweils einen Lagerzapfen der Leitschaufeln ein einzelner Lagerkörper aufgesetzt. Dann werden Halbringe in Umfangsrichtung auf die nebeneinander liegenden Lagerkörper aufgeschoben. Ein derartiges Verfahren ermöglicht die Schaffung eines Leitschaufelkranzes, dessen Innenring aus lediglich zwei Halbringen besteht, die verformungsfrei zum Innenring zusammengesetzt werden können. Aufgrund der verformungsfreien Montage können die Halbringe mit Dichtungen zum Abdichten eines Radialspaltes zu einem gegenüberliegenen Rotorabschnitt versehen sein. Der Innenring kann somit gleichzeitig als Dichtungsträger wirken, der zudem durch die einzelnen Lagerung der Leitschaufeln in den Lagerkörpern speichenzentriert ist, so dass sich ein optimaler Radialspalt zum gegenüberliegenden Rotorabschnitt selbsttätig einstellen kann.

Eine erfindungsgemäße Strömungsmaschine weist zumindest einen erfindungsgemäßen Leitschaufelkranz auf. Aufgrund der optimalen radialen Ausrichtung des Innenrings zum gegenüberliegenden Rotorabschnitt zeichnet sich eine derartige Strömungsmaschine durch einen höheren Verdichterwirkungsgrad als eine Strömungsmaschine mit einem herkömmlichen Leitschaufelkranz aus.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: einen Axialschnitt durch ein erstes Ausführungsbeispiel eines erfindungsgemäßen Leitschaufelkranzes,
- Figur 2: eine perspektivische Anordnung von in Umfangsrichtung nebeneinanderliegenden Lagerkörpern aus Figur 1,
- Figur 3: eine Draufsicht auf die von einem Innenring aus Figur 1 stabilisierten Lagerkörper, und
- Figur 4: einen Axialschnitt durch ein zweites Ausführungsbeispiel des erfindungsgemäßen Leitschaufelkranzes.

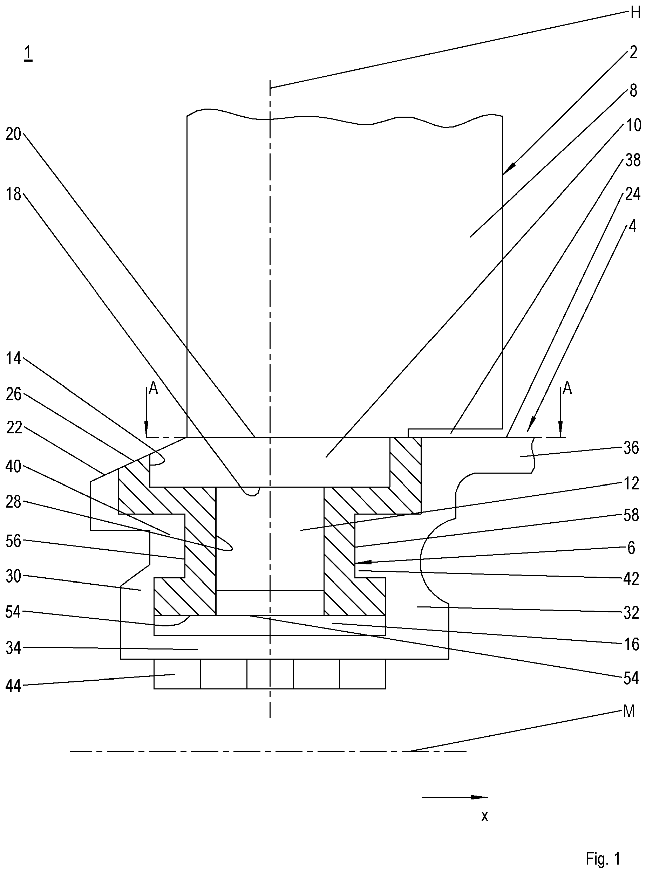

Gemäß einem in Figur 1 gezeigten geschnittenen Ausführungsbeispiel hat ein erfindungsgemäßer Leitschaufelkranz 1 einer Strömungsmaschine wie ein Flugzeugtriebwerk zumindest eine Vielzahl von Leitschaufeln 2, einen Innenring 4 und eine Vielzahl von Lagerkörpern 6. Der Leitschaufelkranz 1 ist statorseitig im Verdichter der Strömungsmaschine angeordnet und umgreift einen nicht gezeigten Rotorabschnitt eines Rotors, der um eine sich in Strömungsrichtung x einer Hauptströmung erstreckende Maschinenachse M rotiert.

Die Leitschaufeln 2 sind um ihre sich radial zur Maschinenachse M erstreckende Schaufelachse bzw. Hauptachse H verstellbar und haben jeweils ein Schaufelblatt 8, einen inneren Schaufelteller 10 und einen sich von dem inneren Schaufelteller 10 radial nach innen erstreckenden Lagerzapfen 12. Zudem haben die Leitschaufeln 2 jeweils einen nicht gezeigten radial äußeren Schaufelteller sowie einen sich von dem äußeren Schaufelteller radial nach außen erstreckenden Verstellzapfen, mittels dem sie jeweils mit einer gehäuseseitigen Verstelleinrichtung zum Verschwenken um ihre Hauptachse H zusammenwirken.

Die inneren Schaufelteller 10 sind jeweils in einem radialen äußeren Senkabschnitt 14 einer Lagerbohrung 16 der Lagerkörper 6 angeordnet. Sie haben eine radial innere Unterseite 18 und eine zur Unterseite 18 entgegengesetzte Oberseite 20. Die Unterseite 18 und die Oberseite 20 verlaufen in dem gezeigten Ausführungsbeispiel parallel bzw. nahezu zueinander. Insbesondere verläuft die Unterseite 18 in Richtung der Maschinenachse M. Die Oberseite 20 bildet mit einer stromaufwärtigen bzw. vorderen Ringraumfläche 22 des Innenrings 4, mit einer stromabwärtigen bzw. hinteren Ringraumfläche 24 des Innenrings 4 und mit jeweils einer von der Lagerbohrung 16 durchsetzten Oberfläche 26 der Lagerkörper 6 einen stufenfreien bzw. nahezu stufenfreien radial inneren Seitenwandabschnitt eines von der Hauptströmung durchströmten Ringraums.

Die Lagerzapfen 12 sind bezogen auf die Hauptachse H gegenüber den inneren Schaufeltellern 10 radial verjüngt und in jeweils einem Buchsenabschnitt 28 der Lagerbohrung 16 geführt. Die Buchsenabschnitte 28 sind gegenüber den Senkabschnitten 14 radial verjüngt und bezogen auf die Maschinenachse M radial innen zu diesen angeordnet.

Der Innenring 4 dient zur radial inneren Stabilisierung bzw. Stützung der Leitschaufeln 2 und ist über einen Radialspalt von dem Rotorabschnitt beabstandet. Er besteht in dem gezeigten Ausführungsbeispiel aus zwei Halbringen mit jeweils einem Umfangswinkel von 180°, die im Bereich einer horizontalen Gehäusetrennebene der Strömungsmaschine zum Innenring 4 zusammengesetzt sind. Sie haben jeweils ein U-förmiges Profil mit einer in Strömungsrichtung x betrachtet vorderen Wandung 30, einer hinteren Wandung 32 und einer die beiden Wandungen 30, 32 miteinander verbindenden Umfangswandung 34.

Die vordere und die hintere Wandung 30, 32 erstrecken sich von der Umfangswandung 18 aus betrachtet radial nach außen und bilden jeweils einen Umfangsabschnitt der vorderen Ringraumfläche 22 und der hinteren Ringraumfläche 24. Dabei erstreckt sich die hintere Ringraumfläche 24 über einen stromabwärtigen Axialvorsprung 36 der hinteren Wandung 32. Zwischen den Schaufelblättern 8 und dem Axialvorsprung 36 bzw. der hinteren Ringraumfläche 24 ist jeweils ein radialer Fahnenspalt 38 gebildet, der zur Erzielung eines hohen Verdichterwirkungsgrades minimiert ist.

Zur Führung auf den Lagerkörpern 6 haben die Wandungen 30, 32 jeweils einen axial nach innen weisenden Führungsvorsprung 40, 42, die somit gegenüberliegend zueinander angeordnet sind. Die Führungsvorsprünge 40, 42 erstrecken sich in Umfangsrichtung der Halbringe und haben jeweils einen vorzugsweise rechteckigen Querschnitt.

Die Umfangswandung 34 ist in Richtung der Maschinenachse M orientiert. Zur Abdichtung des Radialspaltes zwischen dem Innenring 4 und dem gegenüberliegenden Rotorabschnitt ist innenumfangsseitig an der Umfangswandung 34 eine Dichtung 44 angeordnet. Diese ist beispielsweise eine plattenartige Honigwabendichtung und dient zum Eingriff von rotorseitigen Dichtspitzen bzw. Dichtfins. Die Dichtung 44 ist mit der Umfangswandung 34 beorzugterweise verlötet, verschweißt oder vernietet und entsprechend der Halbringe in zwei bogenförmige Dichtelemente mit bevorzugterweise jeweils einem Bogenwinkel von 180° unterteilt. Selbstverständlich ist auch eine stärkere Segmentierung der Dichtelemente möglich.

Die Lagerkörper 6 dienen zur radial inneren Lagerung der Leitschaufeln 2. Jede Lagerkörper 6 dient zur Lagerung einer einzigen Leitschaufel 2, wodurch der Innenring 4 speichenzentriert ist. Vorzugsweise bestehen die Lagerkörper 6 aus einem Kunststoff mit einer hohen thermischen, chemischen und mechanischen Belastbarkeit. Alternativ sind die Lagerkörper 6 Metallkörper, die jeweils zumindest im Bereich ihres Buchsenabschnitts 28 innenumfangsseitig mit einer Gleitschicht versehen sind.

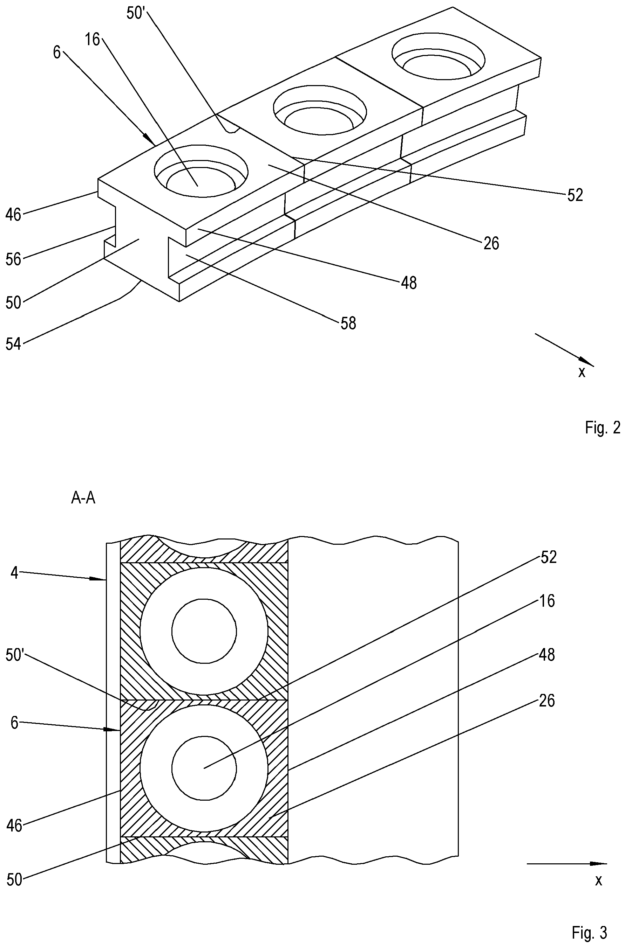

Wie in den Figuren 2 und 3 gezeigt, haben die Lagerkörper 6 jeweils einen quaderförmigen Grundkörper, der von der Lagerbohrung 16 bezogen auf die Maschinenachse M in radialer Richtung durchsetzt ist. Der Grundkörper hat eine in Strömungsrichtung x betrachtet Vorderseite 46, eine Hinterseite 48 und zwei Seitenflächen 50, 52. Zudem hat der Grundkörper die von der Lagerbohrung 16 durchsetzte Oberfläche 26 und eine zu dieser entgegengesetzte und, wie in Figur 1 erkennbar, ebenfalls von der Lagerbohrung 16 durchsetzte Bodenfläche 54. In die Vorderseite 46 und in die Hinterseite 48 ist jeweils eine sich in Umfangsrichtung erstreckende Führungsnut 56, 58 zur Aufnahme jeweils einer der innenringseitigen Führungsvorsprünge 40, 42 eingebracht. Die Führungsnuten 56, 58 haben entsprechend den Führungsvorsprüngen 40, 42 einen rechteckigen Querschnitt. Die Seitenflächen 50, 52 sind eben ausgebildet und dienen zur gegenseitigen Anlage der jeweils benachbarten Lagerkörper 6 im montierten Zustand.

Im Folgenden wird ein bevorzugtes Verfahren zur Montage des Leitschaufelkranzes 1 erläutert: Der Leitschaufelkranz 1 wird dabei pro Gehäusehälfte montiert und erst durch das Zusammensetzen der beiden Gehäusehälften zu einem Ring geschlossen. Zuerst werden die Leitschaufeln 2 mittels ihres Verstellzapfens in entsprechende gehäuseseitige Lagerungen der Gehäusehälften eingesetzt. Dann werden die Lagerkörper 6 einzeln auf den Lagerzapfen 12 positioniert. Die inneren Schaufelteller 10 tauchen in die Senkabschnitte 14 ein und die Lagerzapfen 12 sind in den Buchsenabschnitten 28 aufgenommen. Die Lagerkörper 6 liegen nun in Umfangsrichtung nebeneinander und berühren sich mit ihren jeweils gegenüberliegenden Seitenflächen 52, 50' (vgl. Fig. 2). Dann werden die Halbringe auf die Lagerkörper 6 in Umfangsrichtung verformungsfrei aufgeschoben (vgl. Fig. 3). Hierbei greifen die innenringseitigen Führungsvorsprünge 40, 42 in die lagerkörperseitigen Führungsnuten 56, 58 ein. Die Lagerkörper 6 sind nun in Umfangsrichtung, in axialer Richtung und in radialer Richtung zueinander fixiert. Dadurch, dass die Lagerzapfen 12 gegenüber den inneren Schaufeltellern 10 radial verjüngt sind, wirken deren Unterseiten 18 jeweils als eine ringartige Schulterfläche, die eine Bewegungsbegrenzung für den Innenring 4 bzw. für deren Halbringe darstellt, so dass ein Schließen der Fahnenspalte 38 und somit ein Auflaufen des Innenrings 4 auf die Schaufelblätter 8 bei Wärmeausdehnungen verhindert wird.

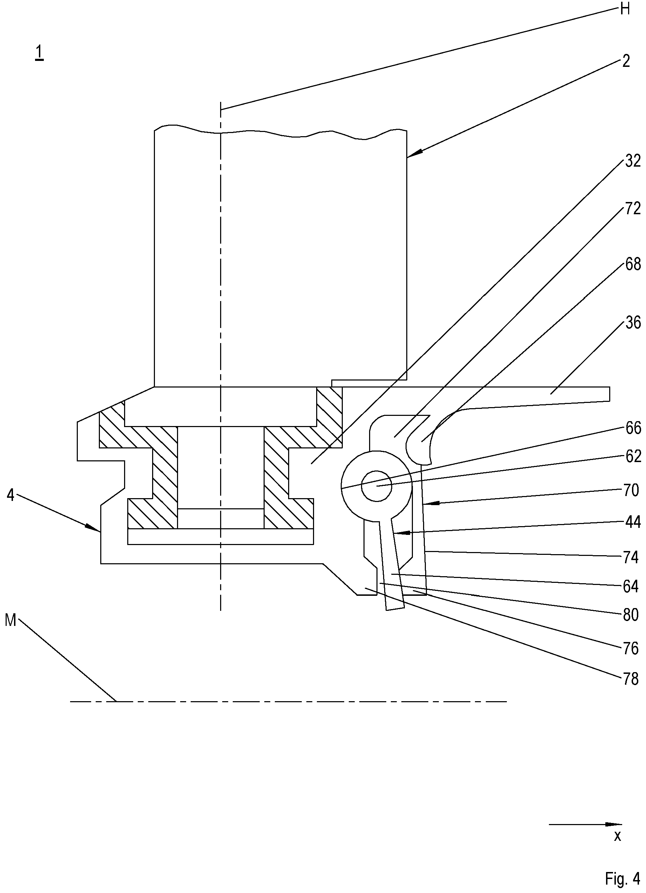

In Figur 4 ist ein Ausführungsbeispiel des erfindungsgemäßen Leitschaufelkranzes 1 gezeigt, das anstelle einer plattenartigen Dichtung eine bürstenartige bzw. dichtlippenartige Dichtung 44 aufweist. Die Dichtung 44 ist stromabwärts der Leitschaufeln 2 im Bereich der hinteren Wandung 32 der Halbringe bzw. des Innenrings 4 angeordnet. Sie setzt sich aus Bürstenelementen zusammen, die entsprechend den Halbringen einen Umfangswinkel von 180° umspannen. Die Bürstenelemente haben jeweils einen Halteabschnitt 62 mit einem kreisförmigen Querschnitt und einen sich in Radialrichtung erstreckenden Dichtabschnitt 64. Die Bürstenelemente stehen mit ihren Dichtabschnitten 64 über die Umfangswandung 34 radial nach innen hervor und schleifen stirnseitig an dem gegenüberliegenden Rotorabschnitt, so dass der Radialspalt geschlossen ist. Sie sind mit dem Halteabschnitt 62 jeweils abschnittsweise in einer rückseitigen Haltenut 66 der hinteren Wandung 32 aufgenommen und mittels eines sich an einem vom Axialvorsprung 36 radial nach innen erstreckenden Radialsteg 68 abstützenden Spannkörper 70 zwischen der hinteren Wandung 32 und dem Radialsteg 68 eingespannt. Durch die Einspannung wird gleichzeitig ein Leckagepfad zwischen der hinteren Wandung 32 und dem Spannkörper 70 geschlossen.

Der Spannkörper 70 erstreckt sich in Umfangsrichtung vorzugsweise um 180°. Ein Innenring weist somit bevorzugterweise für jeden Halbring einen Spannkörper 70 und somit insgesamt zwei Spannkörper 70 auf. Der Spannkörper 70 kann jedoch auch stärker segmentiert sein. Er hat einen formschlüssig mit dem Halteabschnitt 62 und dem Radialsteg 68 zusammenwirkenden Spannabschnitt 72 sowie einen von dem Spannabschnitt 72 entfernt liegenden radial inneren Führungsabschnitt 74. Der Führungsabschnitt 74 hat einen stromaufwärts orientierten Winkelabschnitt 76, der eine axiale hintere Anlage für den Dichtabschnitt 64 darstellt. Eine axiale vordere Anlage für den Dichtabschnitt 64 wird von einem dem Winkelabschnitt 76 gegenüberliegenden Fortsatz 78 im Übergangsbereich der Umfangswandung 34 und der hinteren Wandung 32 geschaffen. Durch den Winkelabschnitt 76 und den Fortsatz 78 wird zudem ein enger Axialspalt 80 gebildet, wodurch einen Leckagepfad in Richtung des Halterabschnitts 62 minimiert wird.

Offenbart ist ein verstellbarer Leitschaufelkranz einer Strömungsmaschine, dessen Leitschaufeln jeweils einzeln in einem Lagerkörper gelagert sind, auf die in Umfangsrichtung betrachtet ein als Dichtungsträger wirkender in zwei Halbringe unterteilter Innenring verformungsfrei aufgeschoben ist, ein Verfahren zur Montage eines derartigen Leitschaufelkranzes sowie eine Strömungsmaschine mit einem derartigen Leitschaufelkranz.

### Bezugszeichenliste

- 1: Leitschaufelkranz
- 2: Leitschaufeln
- 4: Innenring
- 6: Lagerkörper
- 8: Schaufelblatt
- 10: innere Schaufelteller
- 12: Lagerzapfen
- 14: Senkabschnitt
- 16: Lagerbohrung
- 18: Unterseite
- 20: Oberseite
- 22: vordere Ringraumfläche
- 24: hintere Ringraumfläche
- 26: Oberfläche
- 28: Buchsenabschnitt
- 30: vordere Wandung
- 32: hintere Wandung
- 34: Umfangswandung
- 36: Axialvorsprung
- 38: Fahnenspalt
- 40: Vorsprung
- 42: Vorsprung
- 44: Dichtung
- 46: Vorderseite
- 48: Hinterseite
- 50, 50': Seitenfläche
- 52: Seitenfläche
- 54: Bodenfläche
- 56: Führungsnut
- 58: Führungsnut
- 62: Halteabschnitt
- 64: Dichtabschnitt
- 66: Haltenut
- 68: Radialsteg
- 70: Spannkörper
- 72: Spannabschnitt
- 74: Führungsabschnitt
- 76: Winkelabschnitt
- 78: Fortsatz

- H: Hauptachse/Schaufelachse
- M: Maschinenachse
- x: Strömungsrichtung/Axialrichtung

## Patentansprüche

1. Leitschaufelkranz (1) für eine Strömungsmaschine,
mit einer Vielzahl von verdrehbaren Leitschaufeln (2),
mit einem Innenring (4) zur radial inneren Stabilisierung der Leitschaufeln (2),
mit einer Dichtung (44) zum Abdichten eines Radialspaltes zwischen dem Innenring (4) und einem gegenüberliegenden Rotorabschnitt, und
mit Lagerkörpern (6) zum Lagern der Leitschaufeln (2) in dem Innenring (4),
**dadurch gekennzeichnet,**
**dass** jede Leitschaufel (2) in einem einzelnen Lagerkörper (6) mit jeweils einer Lagerbohrung (16) zur Führung eines Lagerzapfens (12) der jeweiligen Leitschaufel (2) gelagert ist und der Innenring (4) aus zwei Halbringen zusammengesetzt ist, die in Umfangsrichtung auf die Lagerkörper aufgeschoben sind, und
**dass** sich die Lagerkörper (6) seitlich berühren und zwei zueinander entgegengesetzte und sich in Umfangsrichtung erstreckende Führungsnuten (56, 58) haben, und dass die Halbringe jeweils sich in Umfangrichtung erstreckenden Führungsvorsprüngen (40, 42) haben, die in die Führungsnuten (56, 58) eingreifen.

2. Leitschaufelkranz nach Anspruch 1, wobei die Lagerkörper (6) jeweils einen Buchsenabschnitt (28), in dem die Leitschaufeln (2) bezogen auf ihre Hauptachse (H) mit jeweils einem Lagerzapfen (12) radial geführt sind, und jeweils einen Senkabschnitt (26) haben, in dem die Leitschaufel (2) mit ihrem jeweils gegenüber dem Lagerzapfen (12) radial erweiterten inneren Schaufelteller (10) aufgenommen sind.

3. Leitschaufelkranz nach Anspruch 1, oder 2, wobei die Lagerkörper (6) aus Kunststoff sind.

4. Leitschaufelkranz nach Anspruch 2, wobei die Lagerkörper (6) metallisch sind und zumindest die Buchsenabschnitte (28) innenumfangseitig mit einer Gleitschicht versehen sind.

5. Leitschaufelkranz nach einem der vorhergehenden Ansprüche, wobei die Dichtung (44) eine Vielzahl von plattenartigen Dichtelementen aufweist, die jeweils an einer Umfangswandung (34) der Halbringe angeordnet sind.

6. Leitschaufelkranz nach einem Ansprüche 1 bis 4, wobei die Dichtung (44) eine Vielzahl von Bürstenelementen aufweist, die stromabwärts der Leitschaufel (2) an den Halbringen lösbar eingespannt sind.

7. Leitschaufelkranz nach Anspruch 6, wobei die Bürstenelemente jeweils mit einem Halteabschnitt (62) in eine Haltenut (66) der Halbringe eintauchen und mittels eines zwischen einem Radialsteg (68) der Halbringe und dem Haltebabschnitt (62) eingesetzten Spannkörper (70) lagefxiert sind.

8. Verfahren zur Montage eines Leitschaufelkranzes (1) nach einem der vorhergehenden Ansprüche, wobei jeweils ein Lagerkörper (6) auf einen Lagerzapfen (12) einer Leitschaufel (2) einzeln aufgesetzt wird und dann Halbringe zum Stabilisieren der Lagerkörper (6) in Umfangsrichtung auf diese aufgeschoben werden.

9. Strömungsmaschine mit zumindest einem Leitschaufelkranz (1) nach einem der Ansprüche 1 bis 7.

## Claims

1. Guide vane ring (1) for a turbomachine, comprising a plurality of rotatable guide vanes (2), an inner ring (4) for radially inner stabilization of the guide vanes (2), a seal (44) for sealing a radial gap between the inner ring (4) and an opposite rotor portion, and bearing bodies (6) for supporting the guide vanes (2) in the inner ring (4), **characterized in that** each guide vane (2) is mounted in an individual bearing body (6) having in each case a bearing hole (16) for guiding a bearing journal (12) of the relevant guide vane (2) and the inner ring (4) is composed of two half rings which are pushed onto the bearing bodies in the circumferential direction, **in that** the bearing bodies (6) touch each other at the sides and have two opposite guide grooves (56, 58) that extend in the circumferential direction, and **in that** the half rings each have guide projections (40, 42) that extend in the circumferential direction and engage in the guide grooves (56, 58).

2. Guide vane ring according to claim 1, wherein the bearing bodies (6) each have a bush portion (28) in which the guide vanes (2) are radially guided in relation to the main axis (H) thereof by a bearing journal (12) in each case, and a recessed portion (26) in which the guide vanes (2) are received by means of the inner vane disk (10) thereof that extends radially opposite the bearing pin (12) in each case.

3. Guide vane ring according to either claim 1 or claim 2, wherein the bearing bodies (6) are made of plastics material.

4. Guide vane ring according to claim 2, wherein the bearing bodies (6) are metal and at least the bush portions (28) are provided with an anti-friction layer on the inner circumference.

5. Guide vane ring according to any of the preceding claims, wherein the seal (44) comprises a plurality of planar sealing elements which are each arranged on a circumferential wall (34) of the half rings.

6. Guide vane ring according to any of claims 1 to 4, wherein the seal (44) comprises a plurality of brush elements which are releasably clamped to the half rings downstream of the guide vane (2).

7. Guide vane ring according to claim 6, wherein the brush elements each enter a retaining groove (66) in the half rings by a retaining portion (62) and are fixed in place by means of a clamping body (70) inserted between a radial extension (68) of the half rings and the retaining portion (62).

8. Method for assembling a guide vane ring (1) according to any of the preceding claims, wherein a bearing body (6) is placed onto a bearing journal (12) of each guide vane (2) individually and then half rings are pushed onto the bearing bodies (6) in the circumferential direction so as to stabilize said bearing bodies.

9. Turbomachine comprising at least one guide vane ring (1) according to any of claims 1 to 7.

## Revendications

1. Assemblage de stator (1) d'une turbomachine, comportant
une pluralité de stators (2) rotatifs,
un anneau intérieur (4) pour la stabilisation radialement intérieure des stators (2),
un joint d'étanchéité (44) permettant de rendre étanche une fente radiale entre l'anneau intérieur (4) et une section de rotor opposée, et
des corps de palier (6) pour le montage des stators (2) dans l'anneau intérieur (4), **caractérisé en ce que**
chaque stator (2) est monté dans un corps de palier (6) individuel comportant respectivement un alésage de palier (16) pour le guidage d'un tourillon de palier (12) du stator (2) respectif, **en ce que** l'anneau intérieur (4) est composé de deux demi-anneaux qui sont poussés sur les corps de palier dans la direction circonférentielle,
**en ce que** les corps de palier (6) sont en contact latéral et comportent deux rainures de guidage (56, 58) opposées l'une à l'autre et s'étendant dans la direction circonférentielle, et **en ce que** les demi-anneaux présentent chacun des saillies de guidage (40, 42) s'étendant dans la direction circonférentielle et venant en prise dans les rainures de guidage (56, 58).

2. Assemblage de stator selon la revendication 1, dans lequel les corps de palier (6) comportent chacun une section de douille (28) dans laquelle les stators (2) sont guidés radialement par rapport à leur axe principal (H) par un tourillon de palier (12) respectif, et comportent chacun une section en creux (26) dans laquelle le stator (2) est logé avec son disque de stator (10) intérieur élargi radialement respectivement par rapport à son tourillon de palier (12).

3. Assemblage de stator selon la revendication 1 ou 2, dans lequel les corps de palier (6) sont constitués de matière plastique.

4. Assemblage de stator selon la revendication 2, dans lequel les corps de palier (6) sont en métal, et au moins les sections de douille (28) sont pourvues d'une couche de glissement sur le côté circonférentiel intérieur.

5. Assemblage de stator selon l'une des revendications précédentes, dans lequel le joint d'étanchéité (44) comprend une pluralité d'éléments d'étanchéité en forme de plaque disposés chacun sur une paroi circonférentielle (34) des demi-anneaux.

6. Assemblage de stator selon les revendications 1 à 4, dans lequel le joint d'étanchéité (44) comprend une pluralité d'éléments de brossage serrés de manière amovible sur les demi-anneaux en aval du stator (2).

7. Assemblage de stator selon la revendication 6, dans lequel les éléments de brossage sont immergés chacun avec une section de retenue (62) dans une rainure de retenue (66) des demi-anneaux, et sont fixés en position au moyen d'un corps de serrage (70) inséré entre une traverse radiale (68) des demi-anneaux et la section de retenue (62).

8. Procédé de montage d'un assemblage de stator (1) selon l'une des revendications précédentes, dans lequel un corps de palier (6) est placé individuellement sur un tourillon de palier (12) d'un stator (2), puis des demi-anneaux pour la stabilisation des corps de palier (6) sont poussés sur ceux-ci dans la direction circonférentielle.

9. Turbomachine comportant au moins un assemblage de stator (1) selon l'une des revendications 1 à 7.
